# EUROPEAN PATENT APPLICATION

(11) **EP 2 612 793 A2**
(43) Date of publication of application: **10.07.2013**
(21) Application number: 13150640.4
(22) Date of filing: 09.01.2013
(51) Int. Cl.: B60N 2/28

(54) **A rotatable and retractable connecting mechanism of a safety seat base**

(30) Priority: 09.01.2012 CN 201220008039 U
(71) Applicant: Lerado (Zhong Shan) Industrial Co., Ltd., Zhong Shan City Guangdong (CN)
(72) Inventor: Hou, Hung-Chung, Tai-Bau City, Chaiyi County (TW); Wang, Bo-Chin, 721 Tainan City (TW); Hsu, Shau-An, 630 Dounan Township, Yunlin County (TW); Cheng, Kuang-Neng, 622 Dalin Town, Chiayi County (TW)
(74) Representative: Ter Meer Steinmeister & Partner

(57) **Abstract**

A rotatable and retractable connecting mechanism (3) of a safety seat base (2) is capable of hiding in the safety seat base (2) in product packing and stowage, and adjustable in length when anchoring the safety seat base (2) to a vehicle seat (20) in normal use. The safety seat base (2) has a receiving space (25), and the rotatable and retractable connecting mechanism (3) has a pair of connectors (31) adjustable in length and pivoted to the safety seat base (2), the pair of connectors (31) can be rotated to hide in the receiving space (25) and to stretch rearward from the receiving space (25) by rotation. A positioning mechanism (5) mounted between the rotatable and retractable connecting mechanism (3) and the safety seat base (2) for preventing the pair of connectors (31) from free rotation relative to the safety seat base (2).

## Description

### FIELD OF THE INVENTION

The present invention relates a connecting mechanism of a safety seat base, especially to a connecting mechanism which is capable of hiding in a safety seat base by rotation and adjustable in length while being extended outward by rotation from the safety seat base.

### DESCRIPTION OF THE RELATED ART

A safety seat base is capable of adapting an infant car seat to a vehicle seat for saving the troublesome of installing the safety seat repeatedly.

The ISOFIX child seat system is now a model child restraint attachment system proposed by the United Nation Economic Commissions for Europe, which includes two lower anchors for connecting a safety seat base to the vehicle seat.

The connecting mechanism of commercial available safety seat base, as being disclosed in U.S. Patent No. 5,703,577 and CN Patent No. 01142914.3 include a fixed connecting mechanism extending rearward that cannot be folded for reducing its product packing size in shipping and stowage. As the connecting mechanism is fixedly rear extending from the rear end of the safety seat base, it is difficult to aim and lead to the two lower anchors of ISOFIX child seat system.

### SUMMARY OF THE INVENTION

For space saving goal and preventing the drawbacks occurred in the related art, the present invention provides a rotatable and retractable connecting mechanism of a safety seat base which is capable of hiding in the safety seat base in product packing and stowage, and adjustable in length when anchoring the safety seat base to a vehicle seat in normal use.

The safety seat base has a receiving space, and the rotatable and retractable connecting mechanism has a pair of connectors adjustable in length and pivoted to the safety seat base, the pair of connectors can be rotated to hide in the receiving space and to stretch rearward from the receiving space by rotation.

A positioning mechanism mounted between the rotatable and retractable connecting mechanism and the safety seat base for preventing the pair of connectors from free rotation relative to the safety seat base.

### BRIEF DESCRIPTION OF THE DRAWINGS

- FIG. 1: is a side view for illustrating a safety seat base is connected to a vehicle seat by an embodiment of a rotatable and retractable connecting mechanism according to the present invention;
- FIG. 2: is a side view schematically showing a safety seat is loading on the safety seat base, and an embodiment of a rotatable and retractable connecting mechanism according to the present invention is retractable from and hideable in the safety seat base by rotation;
- FIG. 3: is a perspective view schematically showing the embodiment of the rotatable and retractable connecting mechanism being protruded reward from the safety seat base (child booster seat);
- FIG. 4: is an exploded perspective view of the rotatable and retractable connecting mechanism according to the present invention;
- FIG. 5: is a perspective view of the rotatable and retractable connecting mechanism according to the present invention;
- FIG. 6: is a side view schematically showing an adjustment in length to the rotatable and retractable connecting mechanism;
- FIG. 7: is a schematic cross-sectional view of an embodiment of the rotatable and retractable connecting mechanism according to the present invention;
- FIG. 8: is a schematic cross-sectional view showing the rotation of the embodiment of the rotatable and retractable connecting mechanism;
- FIG. 9: is a perspective view for schematically showing an embodiment of the rotatable and retractable connecting mechanism being hidden in the safety seat base after a rotation.

### DETAILED DESCRIPTION OF THE PREFERRED EMBODIMENT

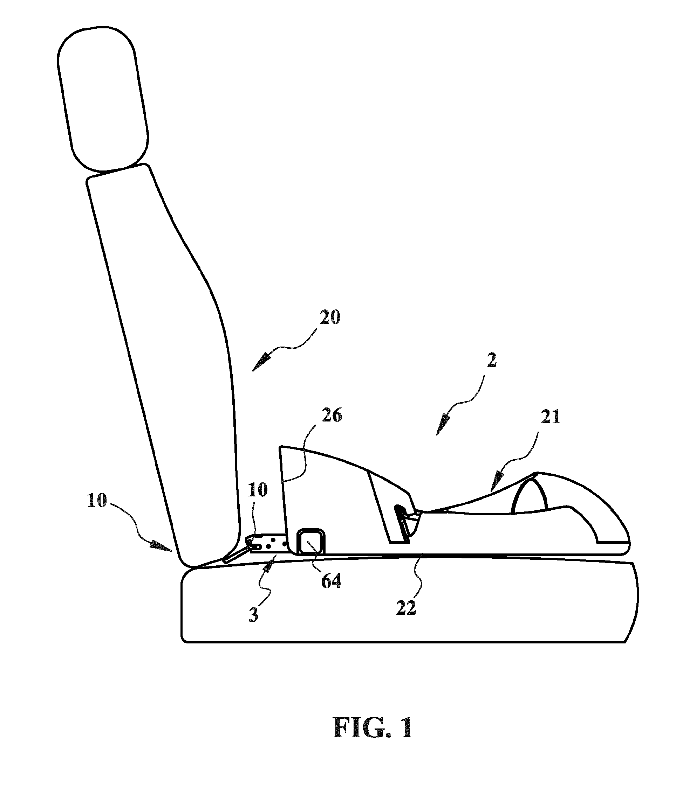

Referring to FIG. 1, a safety seat base 2 is connected to a vehicle seat 20 by an embodiment of a rotatable and retractable connecting mechanism 3 according to the present invention.

The vehicle seat 20 equips with an anchoring element 10, and the rotatable and retractable connecting mechanism 3 has one end capable of releasably locking to the anchoring element 10 so as to connect the safety seat base 2 to the vehicle seat 20.

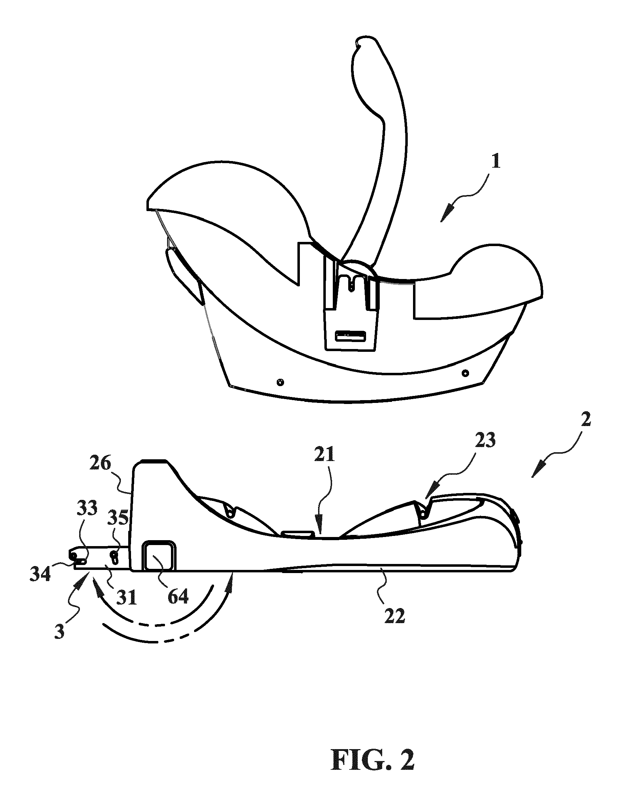

Referring to FIG. 2, the safety seat base 2 of this embodiment has at least a receiving space 25 for hiding the rotatable and retractable connecting mechanism 3 and an upper portion 21 for detachably locking a safety seat 1 thereon. The safety seat base 2 has a rear end for facing to the backrest of the vehicle seat 20, a downside 22 for resting on the vehicle seat 20, and a locking mechanism 23 for releasably locking the safety seat 1 to the upper portion 21 of safety seat base 2.

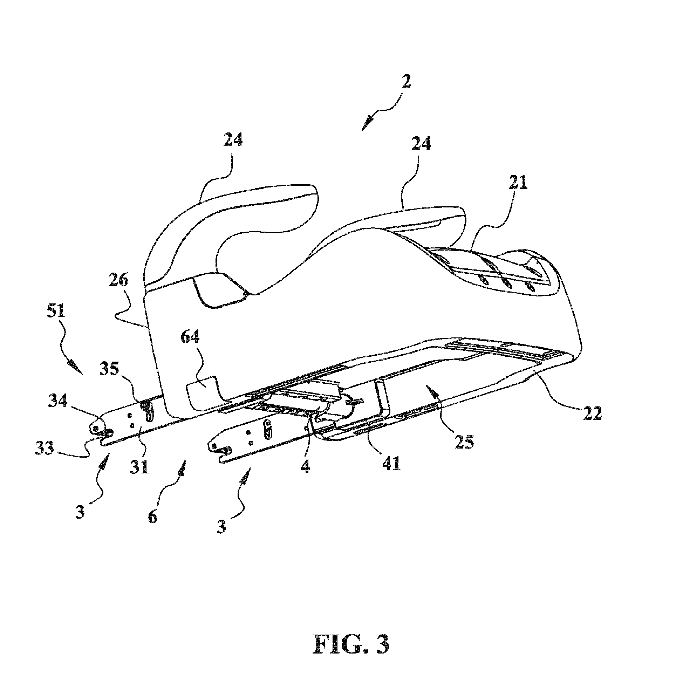

Referring to FIG. 3, the safety seat base 2 may also be embodied as a child booster seat, and the upper portion 21 may be paved with a layer of soft material for cushioning a child thereon, and equipped with a pair of arm rests 24.

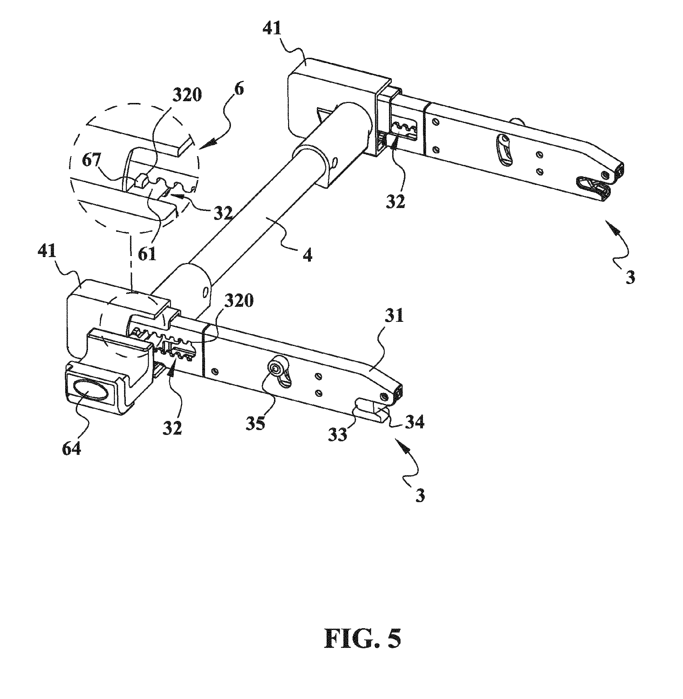

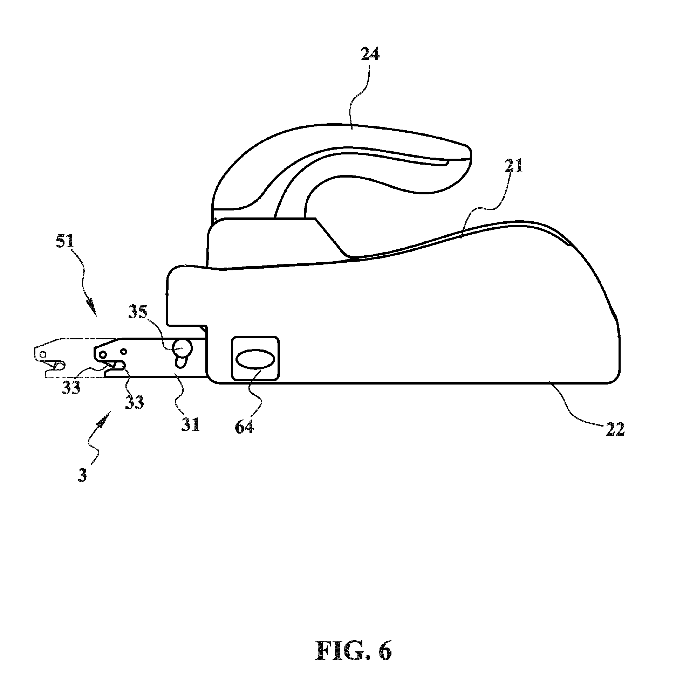

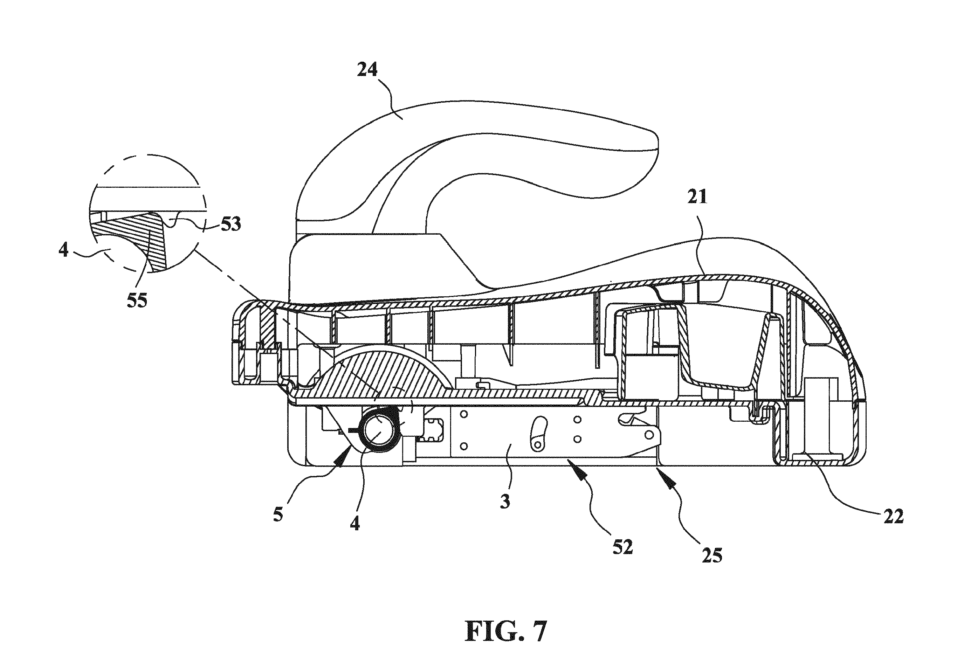

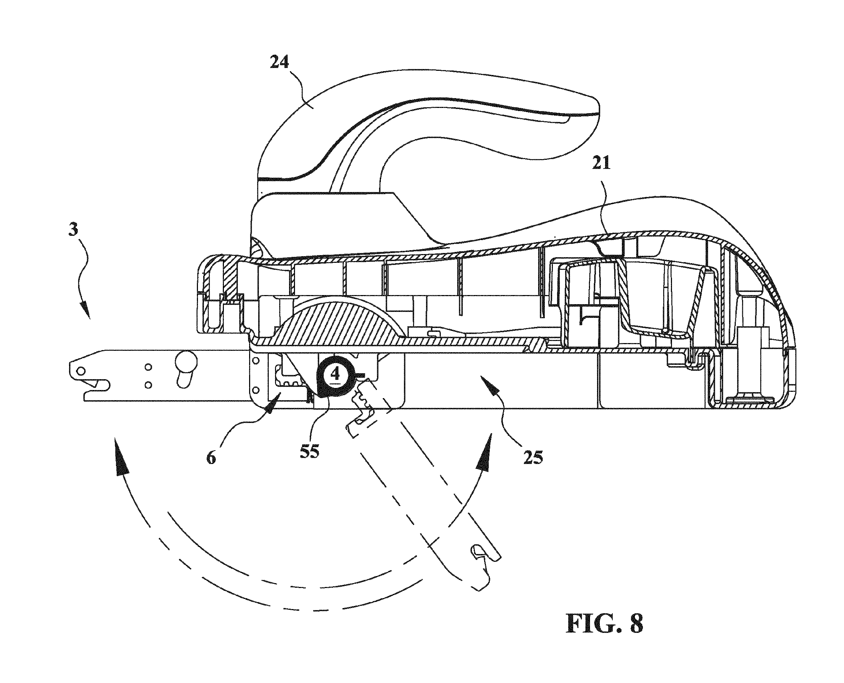

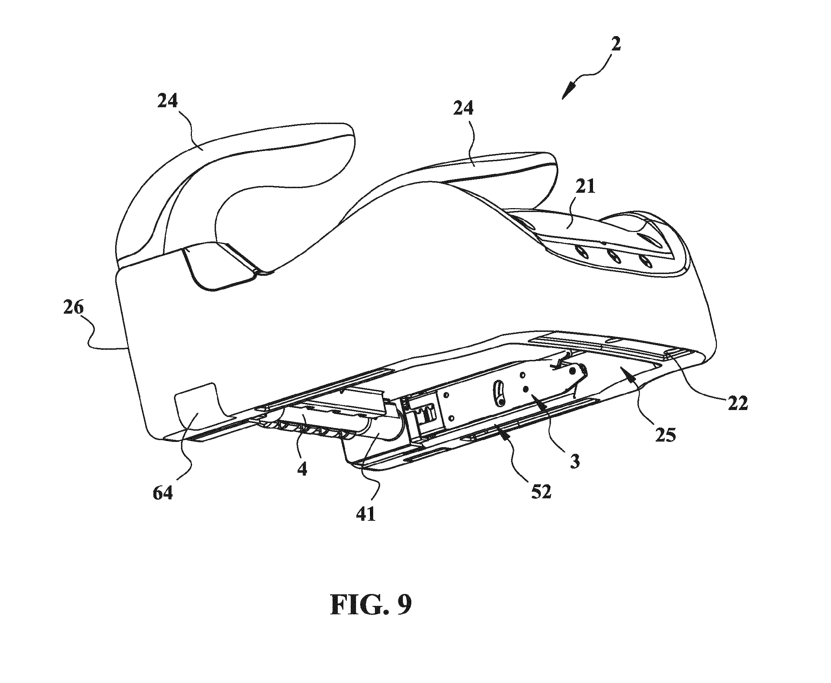

Referring to FIGS. 2 to 9, the rotatable and retractable connecting mechanism 3 according to the present invention is capable of hiding in the safety seat base 2 in product packing and stowage, and adjustable in length when anchoring the safety seat base 2 to a vehicle seat 20 in normal use.

The rotatable and retractable connecting mechanism 3 has a pair of connectors 31 adjustable in length and pivoted to the safety seat base 2, the pair of connectors 31 can be rotated to hide in the receiving space 25 in a hidden position 52 and an outward extending position 51 to stretch rearward from the receiving space 25 by rotation.

The pair of connectors 31 each is formed with a groove 33, and equipped with a latch element 34 and a release actuator 35. The groove 33 is used to hold the anchoring element 10, and the latch element 34 is biased by a spring so as to lock the anchoring element 10 in the groove 33. The release actuator 35 is associated with the latch element 34 for releasing the anchoring element 10.

Preferably, the rotatable and retractable connecting mechanism 3 may be pivoted to the safety seat base 2 via a shaft 4, thereby keeping the pair of connectors 31 to rotate relative to the safety seat base 2 synchronously.

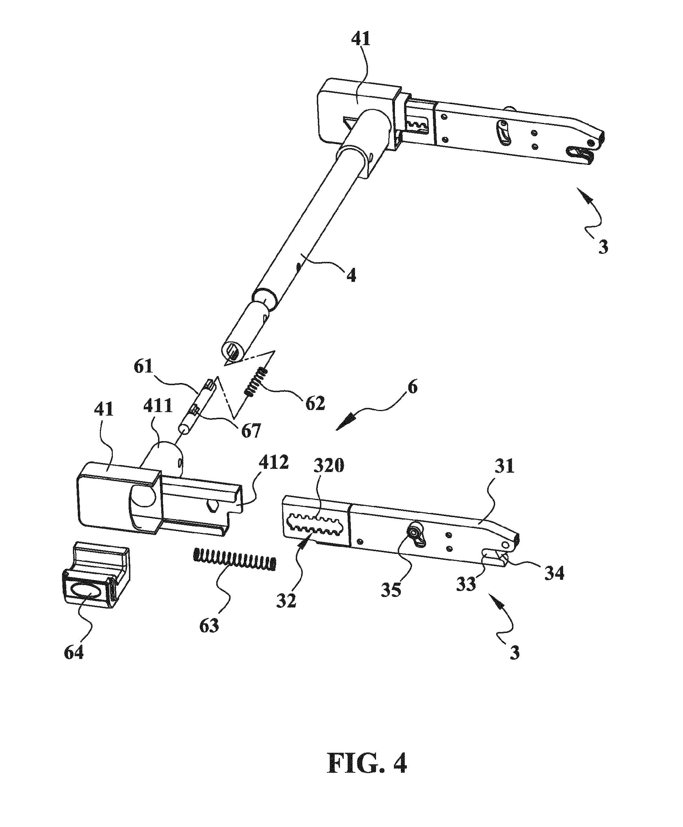

As shown in FIG. 4, the embodiment may further include a pair of sliding sleeves 41 that rotatably mounted between the rotatable and retractable connecting mechanism 3 and the safety seat base 2, and the pair of connectors 31 both are retractably mounted to the pair of sliding sleeves 41.

In this embodiment, the rotatable and retractable connecting mechanism 3 may include a pair of sliding sleeves 41 and a pair of adjusting mechanisms 6. The pair of sliding sleeves 41 each has a hub portion 411 and a guiding rack 412 for slidably receiving one of the pair of connectors 31.

The pair of adjusting mechanisms 6 is operatively mounted to the pair of sliding sleeves 41 for releasably locking the pair of connectors 31 to the guiding racks 412 so as to adjust a protrusion of the pair of connectors 31 in a selected length.

Each of the pair of adjusting mechanisms 6 may include a retractable pin 61 which has one end capable of inserting into one of the guiding racks 412 for preventing the pair of connectors 31 form sliding along the guiding racks 412.

Each of the pair of connectors 31 has a slot 32 formed with a plurality of positioning notches 320 for engaging with a protrusion 67 formed on the retractable pin 61 so as to prevent the pair of connectors 31 form sliding along the guiding racks 412 in varieties of positions.

The retractable pin 61 of this embodiment is received within one end of the shaft 4 and biased by a first resilient element 62 so as to keep protruding outward from the shaft 4 and passing through the hub portion 61 and then engaging with one of the positioning notches 320.

The pair of adjusting mechanisms 6 each has a button 64 associated with one of the retractable pin 61 that capable of disengaging the protrusion 67 of the retractable pin 61 from the positioning notches 320 so as to permit the pair of connectors 31 to slide along the guiding racks 412 to varieties of positions.

Preferably, the button 64 may be exploded on one side of the safety seat base 2 for easy accessible to user and capable of disengaging the protrusion 67 of the retractable pin 61 from the positioning notches 320 by pressing against the button 64.

The pair of connectors 31 may be biased by a pair of second resilient elements 63 so as to protrude outward from the guiding racks 412.

A positioning mechanism 5 is mounted between the rotatable and retractable connecting mechanism 3 and the safety seat base 2 for preventing the pair of connectors 31 from free rotation relative to the safety seat base 2.

The positioning mechanism 5 may include a protruding element 55 and a friction element 53. The protruding element 55 is firmly fixed to the shaft 4; and the friction element 53 is mounted to the safety seat base 2 and kept engaging with the protruding element 55 for prevent the shaft 4 from free rotation relative to the safety seat base 2 by a friction force incurred therebetween while the rotatable and retractable connecting mechanism 3 being hidden in the receiving space 25.

In the outward extending position 51, the pair of connectors 31 can be rotated and directed to hold and lock anchoring element 10 so as to connect the safety seat base 2 to the vehicle seat 20. Further, as the length of the pair of connectors 31 can be shorten after being locked to the anchoring element 10 that can prevent the safety seat base 2 from swinging to and fro on the vehicle seat 20.

## Claims

1. A rotatable and retractable connecting mechanism (3) of a safety seat base (2) capable of hiding in the safety seat base (2) in product packing and stowage, and adjustably anchoring the safety seat base (2) to a vehicle seat (20) in normal use, which is **characterized in that**:
- the safety seat base (2) having a receiving space (25) for hiding the rotatable and retractable connecting mechanism (3) and an upper portion (21) for detachably locking a safety seat (1) thereon;
- the rotatable and retractable connecting mechanism (3) having a pair of connectors (31) adjustable in length and pivoted to the safety seat base (2), the pair of connectors (31) can be rotated to hide in the receiving space (25) and to stretch rearward from the receiving space (25) by rotation; and
- a positioning mechanism (5) mounted between the rotatable and retractable connecting mechanism (3) and the safety seat base (2) for preventing the pair of connectors (31) from free rotation relative to the safety seat base (2).

2. The rotatable and retractable connecting mechanism (3) of Claim 1, wherein the rotatable and retractable connecting mechanism (3) is pivoted to the safety seat base (2) via a shaft (4), thereby keeping the pair of connectors (31) to rotate relative to the safety seat base (2) synchronously.

3. The rotatable and retractable connecting mechanism (3) of Claim 2, further includes a pair of sliding sleeves (41) being rotatably mounted between the rotatable and retractable connecting mechanism (3) and the safety seat base (2), wherein the pair of connectors (31) are retractably mounted to the pair of sliding sleeves (41).

4. The rotatable and retractable connecting mechanism (3) of Claim 2, wherein the rotatable and retractable connecting mechanism (3) including:
- a pair of sliding sleeves (41) each having a hub portion (411) and a guiding rack (412) for slidably receiving one of the pair of connectors (31); and
- a pair of adjusting mechanisms 6 being operatively mounted to the pair of sliding sleeves (41) for releasably locking the pair of connectors (31) to the guiding racks (412) so as to adjust a protrusion of the pair of connectors (31) in a selected length.

5. The rotatable and retractable connecting mechanism (3) of Claim 4, wherein each of the pair of adjusting mechanisms 6 includes a retractable pin 61 having one end capable of inserting into one of the guiding racks (412) for preventing the pair of connectors (31) form sliding along the guiding racks (412).

6. The rotatable and retractable connecting mechanism (3) of Claim 5, wherein each of the pair of connectors (31) has a slot (32) formed with a plurality of positioning notches (320) for engaging with a protrusion (67) formed on the retractable pin (61) so as to prevent the pair of connectors (31) form sliding along the guiding racks (412) in varieties of positions.

7. The rotatable and retractable connecting mechanism (3) of Claim 6, wherein the retractable pin (61) is received within one end of the shaft (4) and biased by a first resilient element (62) so as to keep protruding outward from the shaft (4) and passing through the hub portion (61) and then engaging with one of the positioning notches (320).

8. The rotatable and retractable connecting mechanism (3) of Claim 6, wherein the pair of adjusting mechanisms 6 each has a button (64) associated with one of the retractable pin (61) that capable of disengaging the protrusion (67) of the retractable pin (61) from the positioning notches (320) so as to permit the pair of connectors (31) to slide along the guiding racks (412) to varieties of positions.

9. The rotatable and retractable connecting mechanism (3) of Claim 8, wherein the button (64) is exploded on one side of the safety seat base (2) for easy accessible to user and capable of disengaging the protrusion (67) of the retractable pin (61) from the positioning notches (320) by pressing against the button (64).

10. The rotatable and retractable connecting mechanism (3) of Claim 4, further includes a pair of second resilient elements (63) for biasing against the pair of connectors (31) to protrude outward from the guiding racks (412).

11. The rotatable and retractable connecting mechanism (3) of Claim 1, wherein the positioning mechanism (5) including:
- a protruding element (55) firmly fixed to the shaft (4); and
- a friction element (53) mounted to the safety seat base (2) that kept engaging with the protruding element (55) for prevent the shaft (4) from free rotation relative to the safety seat base (2) by friction force incurred therebetween while the rotatable and retractable connecting mechanism (3) being hidden in the receiving space (25).
